(19)

**Europäisches Patentamt**

**European Patent Office**

**Office européen des brevets**

(11) **EP 4 765 663 A1**

(12) **EUROPEAN PATENT APPLICATION**

(43) Date of publication:
**24.06.2026 Bulletin 2026/26**

(21) Application number: **24222123.2**

(22) Date of filing: **20.12.2024**

(51) International Patent Classification (IPC):
**H04B 7/0456** $^{(2017.01)}$      **H04L 5/14** $^{(2006.01)}$

(52) Cooperative Patent Classification (CPC):
**H04B 7/0456; H04L 5/1461;** H04L 5/0023;
H04L 5/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Imec VZW**
**3001 Leuven (BE)**

• **Katholieke Universiteit Leuven**
**KU Leuven Research & Development**
**3000 Leuven (BE)**

(72) Inventors:
• **Sakhnini, Adham**
**3001 Heverlee (BE)**
• **Bourdoux, Andre**
**4910 Theux (BE)**

(74) Representative: **Ipsilon Belgium**
**Bellevue 5/501**
**9050 Gent-Ledeberg (BE)**

(54) **REDUCING SELF-INTERFERENCE IN MULTI-ANTENNA SYSTEMS**

(57)  Example embodiments relate to a computer-implemented method for reducing self-interference (130) from a transmitter array (220, 250) at a receiver array (230, 260), the computer-implemented method comprising: generating (201) a set of beamforming antenna pairs (210) by selecting at least two non-identical antenna pairs (214, 215) from transmitter antennas (221 - 223) within the transmitter array (220) or from receiver antennas (261, 262, 263) within the receiver array (260); determining (202) a null space of the self-interference (217) at the receiver array (230, 260) comprising null space vectors (216) of the respective beamforming antenna pairs (211 - 213); and determining (203) beamforming coefficients (218) for the respective antennas within the set of beamforming antenna pairs (210) that reduce self-interference at the receiver array based on a linear combination (219) of the null space vectors (216) of the respective beamforming antenna pairs (211 - 213).

Fig. 2

## Description

### Technical Field

The present disclosure generally relates to reducing self-interference in multi-antenna systems.

### Background

Self-interference refers to unwanted interference that occurs in a radio system when signals transmitted by a transmitter of the radio system interferes with a receiver of the same radio system. The self-interference of the transmitted signal with the received signal makes it difficult to decode the incoming signal. This can degrade the quality of the received signal, reduce data rates, and increase error rates if not properly mitigated. Self-interference is a common issue in systems that involve simultaneous transmission and reception, e.g. full-duplex communication systems, digital radars, joint communication and sensing systems, or other systems with closely spaced antennas.

Self-interference can be reduced by physical isolation of the receiver and transmitter antennas, time-domain cancellation, or beamforming cancellation. Physical isolation of the antennas has the problem that it has a large form factor and that the reduction in self-interference is limited. Time-domain cancellation is computationally complex when implemented digitally and costly when implemented in the analogue domain. Beamforming cancellation is also computationally complex and requires accurate knowledge of the channel state. Estimating and maintaining up-to-date channel state information can be challenging, especially in mobile or fast-changing environments. It is a further problem of beamforming cancellation that the transmitter and receiver antennas need to be coherent.

### Summary

It is an object of the present invention, amongst others, to solve or alleviate the above identified problems and challenges by determining beamforming coefficients that reduce self-interference without channel state estimations.
According to a first aspect, this object is achieved by a computer-implemented method for reducing self-interference from a transmitter array at a receiver array, the computer-implemented method comprising:

- generating a set of beamforming antenna pairs by selecting at least two non-identical antenna pairs from transmitter antennas within the transmitter array or from receiver antennas within the receiver array;
- determining a null space of the self-interference at the receiver array comprising null space vectors of the respective beamforming antenna pairs; and
- determining beamforming coefficients for the respective antennas within the set of beamforming antenna pairs that reduce self-interference at the receiver array based on a linear combination of the null space vectors of the respective beamforming antenna pairs.

The transmitter array and the receiver array may, for example, be included within a full-duplex communication system, a digital radar, or a joint communication and sensing system. The transmitter array may comprise one or more transmitter antennas. The receiver array may comprise one or more receiver antennas. In order to generate the set of beamforming antenna pairs, either the transmitter array or the receiver array comprises at least three antennas. In other words, if the set of beamforming antenna pairs are generated by selecting antenna pairs from the transmitter array, the transmitter array comprises at least three transmitter antennas. In this case, the receiver array may comprise one or more receiver antennas. On the other hand, if the set of beamforming antenna pairs are generated by selecting antenna pairs from the receiver array, the receiver array comprises at least three receiver antennas. In this case, the transmitter array may comprise one or more transmitter antennas.
The set of beamforming antenna pairs thus comprises pairs of transmitter antennas or pairs of receiver antennas, also referred to as the beamforming antenna pairs. If the beamforming antennas are transmitter antennas, beamforming coefficients are determined for the transmitter antennas. This allows beam steering the signals transmitted by the transmitter antennas such that the self-interference at the receiver array is reduced. If the beamforming antennas are receiver antennas, beamforming coefficients are determined for the receiver antennas. This allows weighing and combining the received signals as to reduce the self-interference at the receiver array. The beamforming antenna pairs may be strictly disjoint pairs, i.e. antenna pairs wherein no antenna appears in more than one pair, or overlapping pairs, i.e. antenna pairs where at least one antenna is shared between two or more pairs.
By generating the set of beamforming antenna pairs, the null space of the self-interference can directly be determined by determining the null space vectors for the respective beamforming antenna pairs. If the beamforming antennas are transmitter antennas, the null space vector of a beamforming antenna pair expresses the magnitude and phase relationship between signals transmitted by the antennas within the pair such that they nullify at the receiver array. If the beamforming antennas are receiver antennas, the null space vector of a beamforming antenna pair expresses the magnitude and phase relationship between signals received by the antennas within the pair such that they nullify at the receiver array. The null space vectors of the respective beamforming antenna pairs span the null space of the self-interference.

The beamforming coefficients may correspond to the gains and phases of the respective beamforming antennas. These beamforming coefficients are determined based on a linear combination of the null space vectors. As each null space vector of the respective beamforming antenna pairs has reduced self-interference, the linear combination will also have reduced self-interference. The beamforming coefficients may, for example, be determined by means of a least squares method.

The determined beamforming coefficients thus allow to reduce the self-interference by beamforming cancellation without channel state estimations. This has the advantage that the beamforming coefficients can be updated and maintained without maintaining up-to-date channel state information. The computer-implemented method further allows to determine beamforming coefficients in a more computationally efficient manner, e.g. compared to typical beamforming cancellation. This reduces the required computational resources, thereby reducing energy consumption and allowing real-time implementations in, for example, mobile or fast-changing environments. It is a further advantage that the computer-implemented method allows determining the beamforming coefficients for a transmitter array that is non-coherent and/or asynchronous relative to the receiver array. It is a further advantage that self-interference can be reduced at the receiver array without injecting a replica of the signal transmitted by the transmitter array at the receiver array.

According to an example embodiment, the transmitter array may comprise at least three transmitter antennas and the receiver array may comprise at least one receiver antenna; and generating a set of beamforming antenna pairs may comprise selecting pairs from the at least three transmitter antennas within the transmitter array.

According to an example embodiment, determining the null space of the self-interference may further comprise, for the respective beamforming antenna pairs:

- determining a scaling factor for a magnitude of a first signal transmitted by a first transmitter antenna of the pair such that, at the at least one receiver antenna, the scaled magnitude of the first signal matches a magnitude of a second signal transmitted by a second transmitter antenna of the pair; wherein the first and second signal have substantially the same waveform;
- determining an anti-phase of the first signal by determining a minimum within received power levels at the at least one receiver antenna during a sweep of the phase difference between the first and second signal; and
- determining the null space vector of the beamforming antenna pair based on the scaling factor and the anti-phase.

Determining the scaling factor thus allows to perform a gain alignment for the respective beamforming antenna pairs, and determining the anti-phase of the first signal thus allows to perform a phase alignment for the respective beamforming antenna pairs. The first and second signal may be signals without a payload transmitted specifically for performing the gain and phase alignment, e.g. a radar waveform, a synchronization signal, a training signal, or a pilot signal. Alternatively, the first and second signal may be signals with a payload as long as they have substantially the same waveform.

Sweeping the phase difference may comprise sweeping the phase difference between the first and second signal from 0° to 360°. This can, for example, be achieved by varying the phase of the second signal while the phase of the first signal remains fixed, or by varying the phase of both the first and second signal such that the phase difference between them is swept. Preferably, sweeping the phase difference is performed on the second signal and the scaled first signal, i.e. the first signal with a gain aligned to the second signal by scaling the first signal with the determined scaling factor. In doing so, a minimum received power level at the at least one receiver corresponds to a phase difference that is most destructive at the receiver.

The received power levels or signal strength at the at least one receiver antenna during the gain alignment and the phase alignment may, for example, be obtained as the amplitude or power of a range-bin or as a tap in the channel impulse response. This allows performing the gain and phase alignment for the respective beamforming antenna pairs without phase-coherence measurements, as only power levels or signal strength may be measured. This has the advantage that it can reduce the complexity of the measurements and the measurement circuitries, it can improve the robustness to noise, it can work for asynchronized signals, and it can reduce the computational overhead.

According to an example embodiment, the transmitter array may comprise at least one transmitter antenna and the receiver array may comprise at least three receiver antennas; and generating a set of beamforming antenna pairs may comprise selecting pairs from the at least three receiver antennas within the receiver array.

According to an example embodiment, determining the null space of the self-interference further comprises, for the respective beamforming antenna pairs:

- determining a scaling factor for a magnitude of a signal received by a first receiver antenna of the pair such that the scaled magnitude of the signal matches a magnitude of the signal received by a second receiver antenna of the pair; wherein the signal is transmitted by the at least one transmitter antenna;

- determining an anti-phase of the signal received by the second receiver antenna by determining a minimum within combined received power levels at the first receiver antenna and the second receiver antenna during a sweep of the phase difference between the signal received at the first and second receiver antenna; and

- determining the null space vector of the beamforming antenna pair based on the scaling factor and the anti-phase.

According to an example embodiment, the computer-implemented method may further comprise determining the scaling factor as a ratio between absolute magnitudes of the first and second signal, or as a ratio between absolute magnitudes of the signal received by the first receiver antenna and the signal received by the second receiver antenna.

In other words, if the beamforming antenna pairs are transmitter antennas, the scaling factor may be determined as the ratio between the absolute magnitudes or power levels of the first signal transmitted by a first transmitter antenna of the pair and a second signal transmitted by a second transmitter antenna of the pair. Alternatively, if the beamforming antenna pairs are receiver antennas, the scaling factor may be determined as the ratio between the absolute magnitudes or power levels of a signal received by a first receiver antenna of the pair and the same signal received by a second receiver antenna of the pair.

According to an example embodiment, determining the beamforming coefficients may further comprise fitting the linear combination of the null space vectors to an objective beamforming pattern.

The objective beamforming pattern may refer to a specific spatial distribution of signal power or amplitude that the transmitter array and/or receiver array is desired to achieve. This pattern defines the desired directionality and focus of transmitted or received signals to maximize performance according to a certain use of the radio system. The objective beamforming pattern may, for example, be a theoretically calculated vector based on certain performance criteria. The objective beamforming pattern may, for example, be designed to minimize the sidelobe level, maximize the beamforming gain, or may express the desired signal strength in a certain direction for an application of the transmitter array. Fitting the linear combination of the null space vectors to the objective beamforming pattern may, for example, be achieved by a least square method, a robust method, a regularization method, a non-linear method, or a non-parametric method.

According to an example embodiment, the computer-implemented method may further comprise determining respective null spaces of the self-interference for each of a plurality of transmitter antennas within the transmitter array if the set of beamforming antenna pairs is generated by selecting antenna pairs from the receiver array; or for each of a plurality of receiver antennas within the receiver array if the set of beamforming antenna pairs is generated by selecting antenna pairs from the transmitter array.

In other words, if the beamforming antenna pairs are transmitter antennas and the receiver array comprises a plurality of receiver antennas, null spaces of the self-interference comprising null space vectors of the beamforming antenna pairs may be determined for each of the plurality of receiver antennas. Alternatively, if the beamforming antenna pairs are receiver antennas and the transmitter array comprises a plurality of transmitter antennas, null spaces of the self-interference comprising null space vectors of the beamforming antenna pairs may be determined for each of the plurality of transmitter antennas.

According to an example embodiment, the computer-implemented method may further comprise:

- determining range space vectors for the plurality of transmitter antennas or the plurality of receiver antennas based on the respective null spaces of the self-interference;
- determining a null space of the range space vectors; and
- determining beamforming coefficients for the respective antennas within the set of beamforming antenna pairs at the receiver array based on a linear combination of the null space vectors within the null space of the range space vectors.

According to an example embodiment, the transmitter array and the receiver array may be configured to respectively transmit and receive signals at a similar time and at a similar frequency.

According to an example embodiment, the transmitter array may be non-coherent and/or asynchronous relative to the receiver array.

The transmitter array may be non-coherent relative to the receiver array if their respective transmitter and receiver antennas operate independently without maintaining a fixed phase or timing relationship between their signals. The transmitter array may be asynchronous relative to the receiver array if there is no strict timing or synchronization between the signals transmitted or receiver by the respective antennas. The signals transmitted or received by non-coherent and/or asynchronous antennas are thus not phase-locked or synchronized.

According to an example embodiment, the set of beamforming antenna pairs may comprise each of at least three transmitter antennas within the transmitter array at least once, or the set of beamforming antennas pairs may comprise each of at least three receiver antennas within the receiver array at least once.

This allows determining beamforming coefficients for each of the beamforming antennas, i.e. the receiver antennas or the transmitter antennas.

According to an example embodiment, the set of beamforming antenna pairs may be a sequence of adjacent pairs of antennas within the transmitter array or within the receiver array.

A sequence of adjacent pairs may refer to each beamforming antenna pair within the set of beamforming antenna pairs sharing a common element with the next pair. For example, if the transmitter array comprises four transmitter antennas {T1, T2, T3, T4}, a sequence of adjacent beamforming antenna pairs may be {T1, T2}, {T2, T3}, {T3, T4}.

According to an example embodiment, the computer-implemented method may further comprise determining respective sets of beamforming coefficients for the respective antennas within the set of beamforming antenna pairs at a plurality of frequencies.

The null space determinations may thus be carried out in the frequency domain, e.g. per subcarrier in an orthogonal frequency division multiplexing, OFDM, system. This allows applying the beamforming per frequency band. This has the further advantage of mitigating range dispersion in systems with large arrays or wide bandwidths.

According to a second aspect, the disclosure relates to a data processing system configured to perform the computer implemented method according to the first aspect.

According to a third aspect, the disclosure relates to a computer program comprising instructions which, when the program is executed by a computer, cause the computer to perform the computer implemented method according to the first aspect.

According to a fourth aspect, the disclosure relates to a computer-readable medium comprising instructions which, when executed by a computer, cause the computer to perform the computer implemented method according to the first aspect.

According to a fifth aspect, the disclosure relates to a method for reducing self-interference from at least three transmitter antennas at at least one receiver antenna, the method comprising:

- for respective transmitter antenna pairs within a set of transmitter antenna pairs comprising pairs of the at least three transmitter antennas:

    - transmitting, by a first transmitter antenna of the pair, a first signal;
    - transmitting, by a second transmitter antenna of the pair, a second signal having substantially the same waveform as the first signal;
    - scaling an amplitude of the first signal with a scaling factor such that the magnitude of the first signal matches a magnitude of the second signal at the at least one receiver antenna;
    - sweeping the phase difference between the first and second signal;
    - determining an anti-phase of the first signal as a minimum within the received power levels at the at least one receiver antenna during the sweep of the phase difference;

- determining a null space of the self-interference based on the respective scaling factors and the anti-phases; and determining beamforming coefficients for the respective at least three transmitter antennas by performing the computer-implemented method according to the first aspect.

This allows performing a gain and phase alignment for the respective transmitter antenna pairs without phase-coherence measurements, as only power levels or signal strength may be measured. This has the advantage that it can reduce the complexity of the measurements and the measurement circuitries, it can improve the robustness to noise, it can work for asynchronized signals, and it can reduce the computational overhead.

According to a sixth aspect, the disclosure relates to a method for reducing self-interference from at least one transmitter antenna at at least three receiver antennas, the method comprising:

- for respective receiver antenna pairs within a set of receiver antenna pairs comprising pairs of the at least three receiver antennas:

    - transmitting a signal by the at least one transmitter antenna;
    - receiving the signal by a first receiver antenna and by a second receiver antenna of the pair;
    - scaling an amplitude of the signal as received at the first receiver antenna with a scaling factor such that the scaled magnitude of the signal matches a magnitude of the signal received by the second receiver antenna;
    - sweeping the phase difference between the signal received at the first and second receiver antenna;
    - determining an anti-phase of the signal received by the second receiver antenna as a minimum within the power levels obtained by combining the signal received at the first and second receiver antenna;

- determining a null space of the self-interference based on the respective scaling factors and the anti-phases; and determining beamforming coefficients for the respective at least three receiver antennas by performing the computer-implemented method according to the first aspect.

This allows performing a gain and phase alignment for the respective receiver antenna pairs without phase-coherence measurements, as only power levels or signal strength may be measured. This has the advantage that it can reduce the complexity of the measurements and the measurement circuitries, it can improve the robustness to noise, it can work for asynchronized signals, and it can reduce the computational overhead.

**Brief Description of the Drawings**

Fig. 1 shows an example of a radio system comprising a transmitter array and a receiver array;

Fig. 2 shows example steps of a computer-implemented method for reducing self-interference from a transmitter array at a receiver array by determining beamforming coefficients that reduce self-interference without channel state estimations;

Fig. 3 shows further example steps of the computer-implemented method for reducing self-interference from a transmitter array comprising at least three transmitter antennas and a receiver array comprising at least one receiver antenna, according to example embodiments;

Fig. 4 shows steps of the computer-implemented method for reducing the self-interference from a plurality of transmitter antennas at a plurality of receiver antenna, according to example embodiments; and

Fig. 5 shows an example embodiment of a suitable computing system for performing steps according to example aspects of the disclosure.

**Detailed Description of Embodiment(s)**

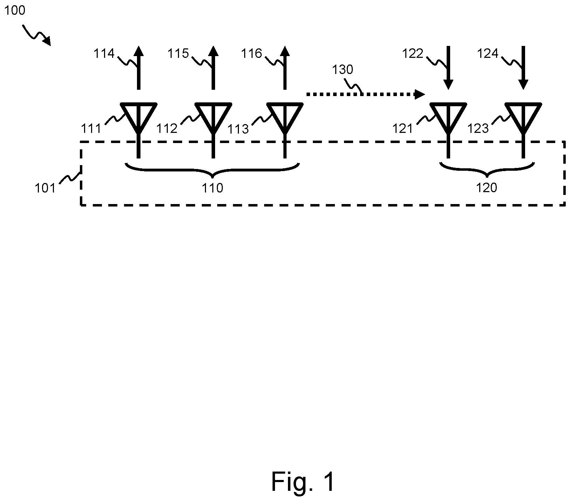

Fig. 1 shows an example 100 of a radio system 101 comprising a transmitter array 110 and a receiver array 120. Transmitter array 110 comprises three transmitter antennas 111, 112, 113 respectively configured to transmit radio signals 114, 115, 116. Receiver array 120 comprises two receiver antennas 121, 123 respectively configured to receive radio signals 122, 124. It will be apparent that both the transmitter array 110 and the receiver array 120 may comprise fewer or more antennas. System 101 may be configured to transmit signals by the transmitter array 110 and receive signals by the receiver array 120 at substantially the same time. System 101 may, for example, be a full-duplex radio system that transmits and receives signals simultaneously on the same frequency band, a digital radar that transmits a waveform and processes the returned signals for detection purposes, a joint communication and sensing system that simultaneously exchanges information and senses the environment, or an other system with closely spaced antennas. By the substantial simultaneous operation of the transmitter array 110 and the receiver array 120, the transmitted radio signals 114, 115, 116 may interfere 130 with the radio signals 122, 124 at the receiver antennas 121, 123. This is referred to as self-interference 130. Self-interference makes decoding the incoming signals 122, 124 by system 101 difficult. As such, self-interference 130 can degrade the quality of the received signals, reduce data rates, and increase error rates if not properly mitigated. It can thus be desirable to reduce the self-interference 130 from a transmitter array 110 at a receiver array 120 to improve the performance of the receiver.

Self-interference can be reduced by physical isolation of the receiver antennas 121, 123 and/or transmitter antennas 111, 112, 113, time-domain cancellation, or beamforming cancellation. Physical isolation of the antennas has the problem that it has a large form factor and that the reduction in self-interference is limited. Time-domain cancellation is computationally complex when implemented digitally and costly when implemented in the analogue domain. Beamforming cancellation is also computationally complex and requires accurate knowledge of the channel state. Estimating and maintaining up-to-date channel state information can be challenging, especially in mobile or fast-changing environments. It is a further problem of beamforming cancellation that the transmitter and receiver antennas need to be coherent.

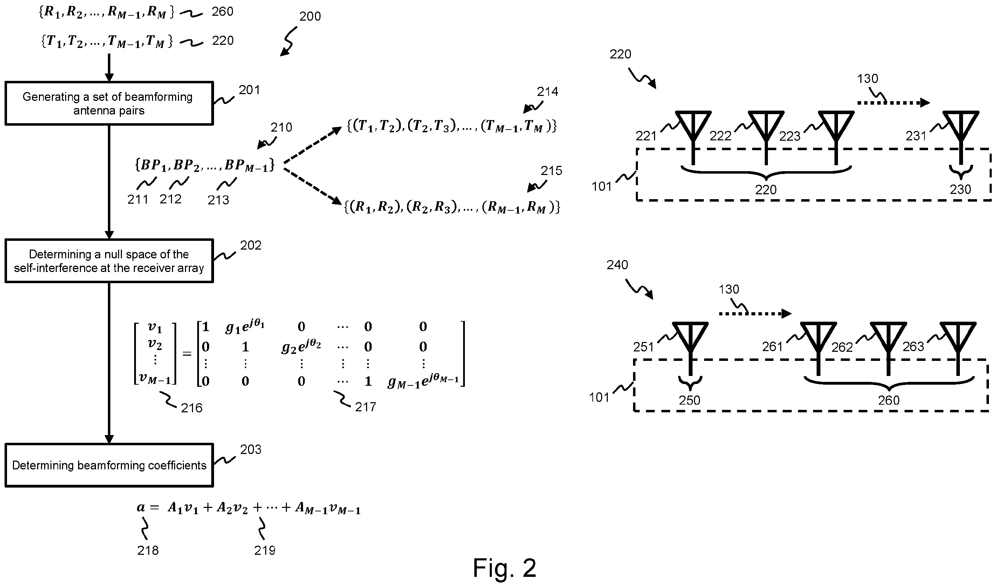

Fig. 2 shows example steps 200 of a computer-implemented method for reducing self-interference from a transmitter array 220, 250, at a receiver array 230, 260 by determining beamforming coefficients that reduce self-interference without channel state estimations.

In a first step 201, a set of beamforming antenna pairs 210 is generated by selecting at least two non-identical transmitter antenna pairs 214 from the transmitter antennas 211, 222, 223 within the transmitter array 220 or by selecting at least two non-identical receiver antenna pairs 215 from the receiver antennas 261, 262, 263 within the receiver array 260.

Thus, to generate the set of beamforming antenna pairs 210 according to the present disclosure, either the transmitter array 220, 250 or the receiver array 230, 260 comprises at least three antennas. Step 201 may thus comprise generating a set of beamforming antenna pairs 210 by selecting pairs from at least three transmitter antennas 221, 222, 223 within the transmitter array 220 or by selecting pairs 215 from at least three receiver antennas 261, 262, 263 within the receiver array 260. It will be apparent that the transmitter array 220, 250 may comprise one 251 or more 221, 222, 223 transmitter antennas and the receiver array 230, 260 may comprise one 231 or more 261, 262, 263 receiver antennas as long as either the transmitter array 220 or the receiver array 260 comprises at least three antennas.

Fig. 2 shows an example 220 of a radio system 101 comprising a transmitter array 220 with three transmitter antennas 221, 222, 223 and a receiver array 230 with a single receiver antenna 231. This allows generating a set of beamforming antenna pairs 210 selected from the three transmitter antennas 221, 222, 223. In other words, a set of beamforming antenna pairs 210, e.g. $\{(T_1,T_2), (T_2,T_3), \dots , (T_{M-1},T_M)\}$ 214, may be selected from a set of M transmitter antennas $\{T_1, T_2, \dots , T_{M-1}, T_M\}$ 220 within a transmitter array if $M \geq 3$. In this case, the receiver array 230 may comprise one or more receiver antennas 231. In the example of 220, a set of beamforming antenna pairs may for example be {(221,222), (222,223), (221, 223)}.

Fig. 2 further shows an example 240 of an other radio system 101 comprising a transmitter array 250 with a single transmitter antenna 251 and a receiver array 260 with three receiver antennas 261, 262, 263. This allows generating a set of beamforming antenna pairs 210 selected from the three receiver antennas 261, 262, 263. In other words, a set of beamforming antenna pairs 210, e.g. $\{(R_1, R_2), (R_2, R_3), \dots , (R_{M-1}, R_M)\}$ 215, may be selected from a set of M receiver antennas $\{R_1, R_2, \dots , R_{M-1}, R_M\}$ 220 within a receiver array if $M \geq 3$. In this case, the transmitter array 250 may comprise one or more transmitter antennas 251. In the example of 240, a set of beamforming antenna pairs may for example be {(261,262), (262,263), (261, 263)}.

The generated set of beamforming antenna pairs 210 may thus comprise pairs of transmitter antennas 214 or pairs of receiver antennas 215 depending on the configuration of the radio system 101. The selected pairs within the set of beamforming antenna pairs 210 may also be referred to as the beamforming antenna pairs 211, 212, 213.

The beamforming antenna pairs 211, 212, 213 may be strictly disjoint pairs, i.e. antenna pairs wherein no antenna appears in more than one pair, or overlapping pairs, i.e. antenna pairs where at least one antenna is shared between two or more pairs. Preferably, the set of beamforming antenna pairs 210 may comprise each of the at least three transmitter antennas 221, 222, 223 within the transmitter array 220 at least once as this allows determining beamforming coefficients 218 for each of the beamforming antennas. More preferably, the set of beamforming antenna pairs 210 may be a sequence of adjacent pairs of antennas 221, 222, 223 within the transmitter array 220, e.g. set {(221,222), (222,223)} in example 220. Alternatively, the set of beamforming antennas pairs may preferably comprise each of the at least three receiver antennas 261, 262, 263 within the receiver array 260 at least once as this allows determining beamforming coefficients 218 for each of the beamforming antennas. More preferably, the set of beamforming antenna pairs 210 may be a sequence of adjacent pairs of antennas 261, 262, 263 within the receiver array 260, e.g set {(261,262), (262,263)} in example 240.

In a next step 202, the null space of the self-interference 217 at the receiver array 230, 260 is determined. The null space of the self-interference 217 comprises null space vectors $v_1$, $v_2$, ... $v_{M-1}$ 216 of the respective beamforming antennas pairs $BP_1$, $BP_2$, ... ,$BP_{M-1}$ 211, 212, 213. If the beamforming antennas are transmitter antennas 221, 222, 223, the null space vector of a beamforming antenna pair 211, 212, 213 expresses the magnitude and phase relationship between signals transmitted by the antennas 221, 222, 223 within the pair such that they nullify at the receiver array 230. In the example 220, considering the example set of two beamforming antenna pairs {(221,222), (222,223)}, the null space vector for the beamforming antenna pair (221,222) may be expressed as $v_1 = [1, g_1e^{j\theta_1}, 0]$ and the null space vector for the beamforming antenna pair (222,223) may be expressed as $v_2 = [0, 1, g_2e^{j\theta_2}]$.

If the beamforming antennas are receiver antennas 261, 262, 263, the null space vector of a beamforming antenna pair 211, 212, 213 expresses the magnitude and phase relationship between signals received by the antennas 261, 262, 263 within the pair such that they nullify at the receiver array 260. In the example 240, considering the example set of two beamforming antenna pairs {(261,262), (262,263)}, the null space vector for the beamforming antenna pair (261,262) may be expressed as $v_1 = [1, g_1e^{j\theta_1}, 0]$ and the null space vector for the beamforming antenna pair (262,263) may be expressed as $v_2 = [0, 1, g_2e^{j\theta_2}]$.

The null space of the self-interference 217 for M beamforming antennas may thus generally be expressed as

$$\begin{bmatrix} v_1 \\ v_2 \\ \vdots \\ v_{M-1} \end{bmatrix} = \begin{bmatrix} 1 & g_1e^{j\theta_1} & 0 & \cdots & 0 & 0 \\ 0 & 1 & g_2e^{j\theta_2} & \cdots & 0 & 0 \\ \vdots & \vdots & \vdots & \vdots & \vdots & \vdots \\ 0 & 0 & 0 & \cdots & 1 & g_{M-1}e^{j\theta_{M-1}} \end{bmatrix} \qquad \text{(Eq. 1)}$$

wherein M - 1 represents the number of beamforming antenna pairs 211, 212, 213 within the set of beamforming antennas pairs 210; $g_m$ represents a scaling factor for matching the magnitude of two respective signals transmitted or received by the respective beamforming antennas within beamforming antenna pair $m$; and $\theta_m$ represents the anti-phase of the two respective signals transmitted or received by the respective beamforming antennas within the beamforming antenna pair m.

In a following step 203, beamforming coefficients 218 are determined for the respective beamforming antennas within the set of beamforming antenna pairs 210 that reduce the self-interference 130 at the receiver array 230, 260. The beamforming coefficients 218 are determined based on a linear combination 219 of the null space vectors $v_1, v_2, ... v_{M-1}$ 216 of the respective beamforming antenna pairs 211, 212, 213. This can thus be achieved by expressing the gains and phases of the M beamforming antennas as a linear combination 219 of the null space vectors $v_1, v_2, ... v_{M-1}$ 216 as:

$$a = A_1 v_1 + A_2 v_2 + \cdots + A_{M-1} v_{M-1} \qquad \text{(Eq. 2)}$$

wherein $a$ represents a vector of $M$ beamforming coefficients. As each null space vector $v_1, v_2, ... v_{M-1}$ 216 of the respective beamforming antenna pairs 211, 212, 213 has reduced self-interference at the receiver array 230, 260, the linear combination 219 of Eq. 2 also has reduced self-interference at the receiver array 230, 260.

The coefficients $A_1, A_2, ... , A_{M-1}$ may be determined by a least squares method. This can be achieved by fitting the linear combination 219 to an objective beamforming pattern $b$. The objective beamforming pattern $b$ may be a vector indicative for a specific spatial distribution of signal power or amplitude that the transmitter array 220, 250 and/or receiver array 230, 260 is desired to achieve in a certain application of the radio system 101. Vector $b$ may thus, for example, express beamforming coefficients for transmitter antennas 221, 222, 223 within transmitter array 220 that achieves a strong signal at a certain geospatial location that is important for the desired function of the radio system 101. Alternatively or complementary, vector $b$ may for example be designed to minimize the sidelobe level or to maximize the beamforming gain. Objective pattern $b$ may thus define the desired directionality and focus of transmitted or received signals to maximize performance according to a certain implementation or use of the radio system 101. Vector $b$ may, for example, be theoretically calculated. Fitting the linear combination 219 of the null space vectors $v_1, v_2, ... v_{M-1}$ 216 to the objective beamforming pattern $b$ may, for example, be achieved by a least square method, a robust method, a regularization method, a non-linear method, or a non-parametric method.

It will be apparent that, if the beamforming antennas are transmitter antennas 221, 222, 223, beamforming coefficients 218 are determined for the transmitter antennas 221, 222, 223. This allows beam steering the signals transmitted by the transmitter antennas 221, 222, 223 such that the self-interference 130 at the receiver array 230 is reduced. It will further be apparent that, if the beamforming antennas are receiver antennas 261, 262, 263, beamforming coefficients 218 are determined for the receiver antennas 261, 262, 263. This allows weighing and combining the signals received by the respective receiver antennas 261, 262, 263 as to reduce the self-interference at the receiver array 260.

The determined beamforming coefficients 218 thus allow to reduce the self-interference 130 by beamforming cancellation without channel state estimations. This has the advantage that the beamforming coefficients 218 can be updated and maintained without maintaining up-to-date channel state information. The computer-implemented method further allows to determine beamforming coefficients 218 in a more computationally efficient manner, e.g. compared to typical beamforming cancellation. This reduces the required computational resources, thereby reducing energy consumption and allowing real-time implementations in, for example, mobile or fast-changing environments. It is a further advantage that the computer-implemented method allows determining the beamforming coefficients 218 for a transmitter array 220, 250 that is non-coherent and/or asynchronous relative to the receiver array 230, 260 as the null space vectors may be determined based on non-coherent operations. It is a further advantage that self-interference can be reduced at the receiver array without injecting a replica of the signal transmitted by the transmitter array at the receiver array.

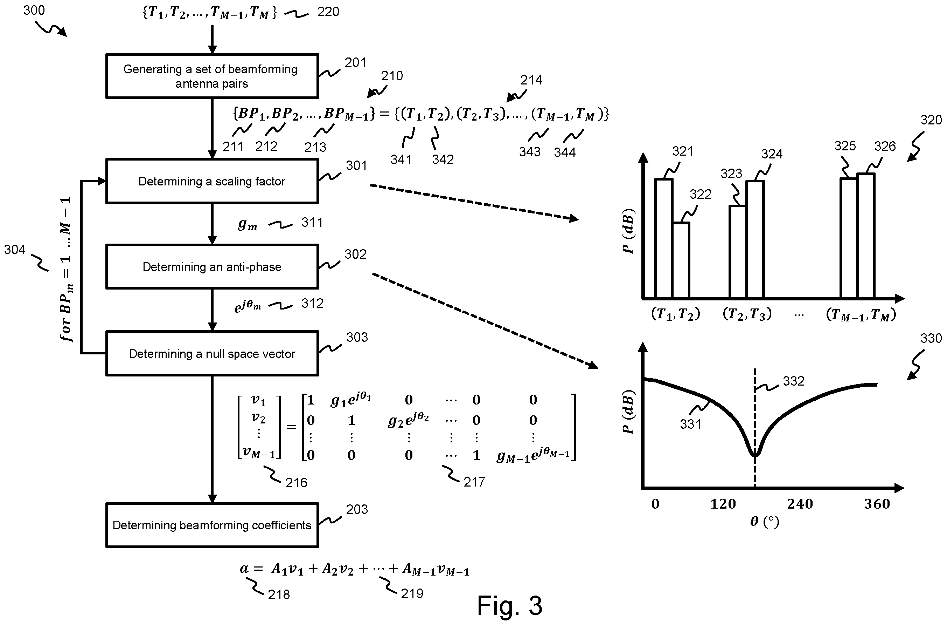

Fig. 3 shows further example steps 300 of the computer-implemented method for reducing self-interference from a transmitter array comprising at least three transmitter antennas and a receiver array comprising at least one receiver antenna, according to example embodiments. The steps 300 may thus be performed for reducing the self-interference in a radio system as illustrated in example 220 of Fig. 2. It will be apparent that in this case, as described in relation to Fig. 2, the generated set of beamforming antenna pairs 210 may comprise transmitter antennas 214 of the transmitter array. Step 201 may thus comprise generating a set of beamforming antenna pairs 210 by selecting pairs from the at least three transmitter antennas within the transmitter array.

Determining the null space of the self-interference 217, i.e. step 202 in Fig. 2, may further comprise steps 301, 302, 303, and 304. In step 301, a scaling factor $g_1$ may be determined for the first beamforming antenna pair 341, 342 for matching the magnitude or power level of signals transmitted by the respective transmitter antennas $T_1$ 341 and $T_2$ 342 within the beamforming antenna pair $(T_1, T_2)$. This can be achieved by determining or estimating the magnitude $h_1$ of a first signal and the magnitude $h_2$ of a second signal at the receiver array, i.e. the at least one receiver antenna. The first signal may be transmitted by a first transmitter antenna of the pair, i.e. $T_1$ 341, and the second signal may be transmitted by a second transmitter antenna of the pair, i.e. $T_2$ 342. The first and second signal may have substantially the same waveform. The first and second signal may be signals without a payload transmitted specifically for determining the scaling factor, e.g.

a radar waveform, a synchronization signal, a training signal, or a pilot signal. Alternatively, the first and second signal may be signals with a payload as long as they have substantially the same waveform.

The magnitudes $h_1$ and $h_2$ may be determined by measurement at the receiver array, e.g. based on the amplitude or power of a range-bin at the receiver array or by a tap in the channel impulse response at the receiver array. Alternatively, the magnitudes $h_1$ and $h_2$ may be estimated by, for example, a path loss model. The scaling factor may then be determined as the ratio between the absolute magnitude $|h_1|$ of the first signal at the receiver array and the absolute magnitude of the second signal $|h_2|$ at the receiver array, i.e. $g_1 = |h_1| / |h_2|$. Determining the scaling factor $g_1$ thus allows to perform a gain alignment for the first beamforming antenna pair $(T_1, T_2)$. Fig. 3 further shows an example 320 of the aligned antenna gains 321 - 326 for the respective antenna pairs, i.e. the gain 321 - 326 of the respective antennas $T_1 \ldots T_M$ to have the same power level at the receiver array.

In a following step 302, an anti-phase $\theta_1$ of the first signal may be determined relative to the second signal. This can be achieved by aligning the gain 321, 322 of transmitter antennas $T_1$ 341 and $T_2$ 342 within the beamforming antenna pair based on the determined scaling factor $g_1$ and, subsequently, sweeping the phase difference between the first and second signal. Sweeping the phase difference may comprise sweeping the phase difference between the first and second signal from 0° to 360°. This can, for example, be achieved by varying the phase of the second signal while the phase of the first signal remains fixed, by varying the phase of the first signal while the phase of the second signal remains fixed, or by varying the phase of both the first and second signal such that the phase difference between them is swept.

While sweeping the phase difference, the received power level 331 at the at least one receiver antenna may be obtained. By determining a minimum 332 within the received power level 331 during the sweep, the anti-phase $\theta_1$ can be determined as it corresponds to a phase difference between the first and second signal that is most destructive at the receiver array. Determining the anti-phase $\theta_1$ of the first signal thus allows to perform a phase alignment for the first beamforming antenna pair $(T_1, T_2)$.

In a following step 303, the null space vector $v_1$ of the first beamforming antenna pair $(T_1, T_2)$ can be determined based on the determined scaling factor $g_1$ and the determined anti-phase $\theta_1$. This can, for example, be achieved by constructing the vector $v_1 = [1, g_1 e^{j\theta_1}, 0]$. Steps 301, 302, and 303 may then be repeated 304 for the respective beamforming antenna pairs $\{(T_1, T_2), (T_2, T_3), \ldots, (T_{M-1}, T_M)\}$ within the generated set of beamforming antenna pairs 214. In doing so, the null space of the self-interference 217 can be obtained.

Steps 301 and 302 thus allow performing a gain and phase alignment for the respective beamforming antenna pairs without phase-coherence measurements, as only power levels or signal strength may be measured. This has the advantage that it can reduce the complexity of the measurements and the measurement circuitries, it can improve the robustness to noise, it can work for asynchronized signals, and it can reduce the computational overhead.

If the beamforming antennas are receiver antennas instead of transmitter antennas, similar steps 301 - 303 may be performed for determining the null space of the self-interference 217 for the respective beamforming antenna pairs (not shown in Fig. 3). In this case, the computer-implemented method may thus be performed for reducing the self-interference in a radio system as illustrated in example 240 of Fig. 2, i.e. for reducing the self-interference from a transmitter array comprising at least one transmitter antenna at a receiver array comprising at least three receiver antennas. It will be apparent that in this case, as described in relation to Fig. 2, the generated set of beamforming antenna pairs 210 may comprise receiver antennas of the receiver array.

The scaling factor $g_1$ may then be determined for matching the magnitude or power level of a signal received by the respective receiver antennas $R_1$ and $R_2$ within the first beamforming antenna pair $(R_1, R_2)$. The signal may be transmitted by the at least one transmitter antenna within the transmitter array. In other words, the magnitude of the same signal as received at the two receiver antennas within the pair may be compared. The signal transmitted by the at least one transmitter may be a signal without a payload transmitted specifically for determining the scaling factor, e.g. a radar waveform, a synchronization signal, a training signal, or a pilot signal. Alternatively, the signal may have a payload. The scaling factor may be determined as the ratio between the absolute magnitude $|h_1|$ of the signal as received at the first receiver antenna $R_1$ and the absolute magnitude $|h_2|$ of the same signal as received at the second receiver antenna $R_2$, i.e. $g_1 = |h_1|/|h_2|$.

The anti-phase $\theta_1$ may then be determined by determining a minimum within the combined power level of the signal received at the first receiver antenna $R_1$ and the second receiver antenna $R_2$ during a sweep of the phase difference between the signal received at the respective antennas $R_1$ and $R_2$. The phase difference can, for example, be swept by keeping the phase of the signal received at antenna $R_1$ fixed while the phase of the signal received at antenna $R_2$ is varied, e.g. by shifting the phase incrementally after reception by antenna $R_2$. The combined power level of the signal may be obtained by combining, e.g. summing, the signal received at antenna $R_1$ and the signal received at antenna $R_2$ post reception at the receiver array. In doing so, the anti-phase $\theta_1$ can be determined as it corresponds to a phase difference between the signal received at the first $R_1$ and second $R_2$ receiver antenna that is most destructive at the receiver array.

It will be apparent that determining the scaling factor and the anti-phase may then further be repeated for the other respective receiver antenna pairs within the set of beamforming antenna pairs. This allows performing a gain and phase alignment for the respective beamforming antenna pairs without phase-coherence measurements, as only power levels or signal strength may be measured. This has the advantage that it can reduce the complexity of the measurements and the measurement circuitries, it can improve the robustness to noise, it can work for asynchronized signals, and it can reduce the computational overhead.

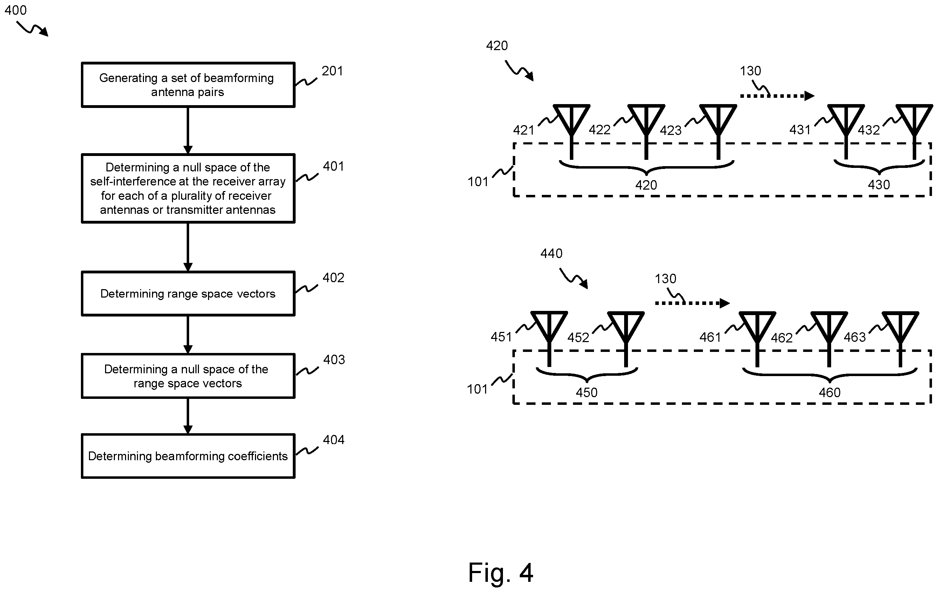

Fig. 4 shows steps 400 of the computer-implemented method for reducing the self-interference from a plurality of transmitter antennas 421, 422, 423, 451, 452 at a plurality of receiver antennas 431, 432, 461, 462, 463.

Fig. 4 shows an example 420 of a radio system 101 with a transmitter array 420 comprising three transmitter antennas 421 - 423 and a receiver array 430 comprising two receiver antennas 431, 432. In this example 420, the beamforming antennas may be the transmitter antennas 421 - 423. In a first step 201, a set of beamforming antenna pairs may thus be selected from the transmitter antennas 421 - 423. In a following step 401, the null space of the self-interference may be determined for each of the respective receiver antennas 431 - 432 within the receiver array 430. In other words, step 202 described in relation to example 220 of Fig. 2 may be performed for each of the plurality of receiver antennas 431 - 432. It will be apparent that performing step 202 for each receiver antenna 431 - 432 within the receiver array 430 may further comprise performing steps 301 - 304 described in relation to Fig. 3. In doing so, respective null spaces may be obtained of the self-interference at the respective receiver antennas 431 - 432. These respective null spaces may each comprise a set of null space vectors. In the example 420, two null spaces may thus be obtained that comprise a set of, for example, two null space vectors. It will be apparent that the number of null space vectors depends on how the beamforming antenna pairs are selected to form the set of beamforming antenna pairs, e.g. strictly disjoint pairs, overlapping pairs, or a sequence of adjacent pairs.

Fig. 4 further shows an example 440 of a radio system 101 with a transmitter array 450 comprising two transmitter antennas 451, 452 and a receiver array 460 comprising three receiver antennas 461 - 463. In this example 440, the beamforming antennas may be the receiver antennas 461 - 463. In this example 440, the set of beamforming antenna pairs may thus be selected from the receiver antennas 461 - 463 in step 201. In a following step 401, the null space of the self-interference may be determined for each of the respective receiver antennas 431 - 432 within the receiver array 430. In other words, step 202 described in relation to example 240 of Fig. 2 may be performed for each of the plurality of receiver antennas 461 - 463. In doing so, respective null spaces may be obtained of the self-interference at the respective receiver antennas 461 - 463. These respective null spaces may each comprise a set of null space vectors. In the example 440, two null spaces may thus be obtained that comprise a set of, for example, two null space vectors. It will be apparent that the number of null space vectors depends on how the beamforming antenna pairs are selected to form the set of beamforming antenna pairs, e.g. strictly disjoint pairs, overlapping pairs, or a sequence of adjacent pairs.

Step 401 may thus comprise determining null space vectors $v_{m,n}$ for m transmitter antennas and $n$ receiver antennas. This may result in a total of $N$ null space vectors $v_{m,n}$ corresponding to the M - 1 beamforming antenna pairs. In a following step 402, range space vectors $r_n$ may be determined for the plurality of n receiver antennas based on the respective null spaces. This can, for example, be achieved by performing a singular value decomposition, SVD, on the null space vectors $v_{m,n}$ for each of the n receiver antennas. To this end, a matrix $A_n = [v_{1,n} ; v_{2,n}; ... ; v_{M-1,n}]$ may be created for each receiver antenna n. The range space may then be represented by any vector $r_n$ that is orthogonal to all columns in $A_n$. Determining $r_n$ may then be achieved by performing a SVD on $A_n$ such that $A_n = U_n \Sigma_n V_n$, wherein $U_n$ expresses the left singular vectors, $V_n$ expresses the right singular vectors, and $\Sigma_n$ expresses the singular values. The range space vectors $r_n$ may then be obtained from the $M^{th}$ column of the left singular vectors $U_n$.

In a following step 403, the null space of the range space vectors $r_n$ may be determined. This can be achieved by creating a matrix $R$ comprising the $N$ determined range space vectors $R_n$, i.e. $R = [r_1, r_2, ... , r_n]$. An SVD may then be performed on the matrix $R$ such that $R = U \Sigma V$, wherein U expresses the left singular vectors, $V$ expresses the right singular vectors, and $\Sigma$ expresses the singular values. The null space of the range space vectors may then be obtained from the last $M - N$ columns of the left singular vectors $U = [u_1, u_2, ... , u_N, v_1, v_2, ... , v_{M-N}]$. Herein, $[v_1, v_2, ... , v_{M-N}]$ represents the null space of the range space vectors $r_n$. Thus, the respective vectors $v_1, v_2, ... , v_{M-N}$ represent the null space vectors of that null space.

In a next step 404, the beamforming coefficients for the respective beamforming antennas, e.g. 421 - 423 or 461 - 463, at the receiver array, e.g. 430 or 460, may be determined based on a linear combination of the null space vectors $v_1, v_2, ... , v_{M-N}$ within the null space of the range space vectors.

The computer-implemented method may further comprise determining respective sets of beamforming coefficients for the respective beamforming antennas at a plurality of frequencies. In other words, the steps described in relation to Fig. 2 -4 may be repeated for a plurality of frequencies. The null space determinations may thus be carried out in the frequency domain, e.g. per subcarrier in an orthogonal frequency division multiplexing, OFDM, system. This allows applying the beamforming per frequency band. This has the further advantage of mitigating range dispersion in systems with large arrays or wide bandwidths.

The transmitter antennas and receiver antennas of the radio system 101 described in Figs. 2 - 4 may further be provided into distinct submodules of the antenna arrays. These submodules may be spatially distributed, i.e. arranged at a distance between them. In this case, the computer-implemented method may further be used to reduce the self-interference of the line-of-sight path between the submodules.

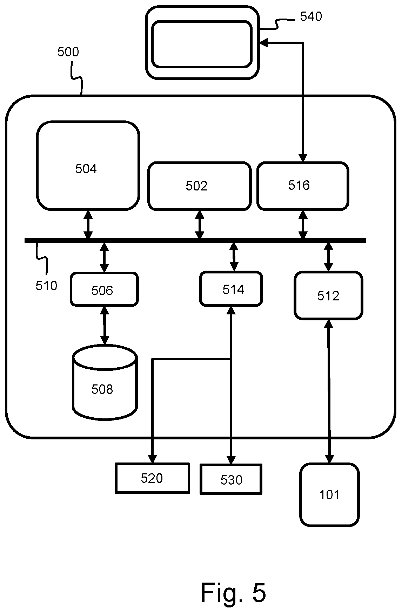

Fig. 5 shows a suitable computing system 500 enabling to implement embodiments of the above described method according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems such as for example, amongst others, radio system 101. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, etc. could be used.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1.  A computer-implemented method for reducing self-interference (130) from a transmitter array (220, 250) at a receiver array (230, 260), the computer-implemented method comprising:

- generating (201) a set of beamforming antenna pairs (210) by selecting at least two non-identical antenna pairs (214, 215) from transmitter antennas (221 - 223) within the transmitter array (220) or from receiver antennas (261, 262, 263) within the receiver array (260);
- determining (202) a null space of the self-interference (217) at the receiver array (230, 260) comprising null space vectors (216) of the respective beamforming antenna pairs (211 - 213); and
- determining (203) beamforming coefficients (218) for the respective antennas within the set of beamforming antenna pairs (210) that reduce self-interference at the receiver array based on a linear combination (219) of the null space vectors (216) of the respective beamforming antenna pairs (211 - 213).

2. The computer-implemented method according to claim 1, wherein the transmitter array (220) comprises at least three transmitter antennas (221, 222, 223) and the receiver array (230) comprises at least one receiver antenna (231); and wherein generating (201) a set of beamforming antenna pairs (210) comprises selecting pairs (214) from the at least three transmitter antennas (221, 222, 223) within the transmitter array (220).

3. The computer-implemented method according to claim 2, wherein determining (202) the null space of the self-interference further comprises, for the respective beamforming antenna pairs (304):

- determining (301) a scaling factor (311) for a magnitude of a first signal transmitted by a first transmitter antenna (341) of the pair such that, at the at least one receiver antenna, the scaled magnitude of the first signal matches a magnitude of a second signal transmitted by a second transmitter antenna (342) of the pair; wherein the first and second signal have substantially the same waveform;
- determining (302) an anti-phase (312) of the first signal by determining a minimum (332) within received power levels (331) at the at least one receiver antenna during a sweep of the phase difference between the first and second signal; and
- determining (303) the null space vector (216) of the beamforming antenna pair based on the scaling factor and the anti-phase.

4. The computer-implemented method according to claim 1, wherein the transmitter array (250) comprises at least one transmitter antenna (251) and the receiver array (260) comprises at least three receiver antennas (261, 262, 263); and wherein generating (201) a set of beamforming antenna pairs (210) comprises selecting pairs (215) from the at least three receiver antennas (261, 262, 263) within the receiver array (260).

5. The computer-implemented method according to claim 4, wherein determining (202) the null space of the self-interference further comprises, for the respective beamforming antenna pairs:

- determining a scaling factor for a magnitude of a signal received by a first receiver antenna of the pair such that the scaled magnitude of the signal matches a magnitude of the signal received by a second receiver antenna of the pair; wherein the signal is transmitted by the at least one transmitter antenna;
- determining an anti-phase of the signal received by the second receiver antenna by determining a minimum within combined received power levels at the first receiver antenna and the second receiver antenna during a sweep of the phase difference between the signal received at the first and second receiver antenna; and
- determining the null space vector of the beamforming antenna pair based on the scaling factor and the anti-phase.

6. The computer-implemented method according to any of the preceding claims, wherein determining the beamforming coefficients further comprises fitting the linear combination of the null space vectors to an objective beamforming pattern.

7. The computer-implemented method according to any of the preceding claims, further comprising determining (401) respective null spaces of the self-interference for each of a plurality of transmitter antennas (451, 452) within the transmitter array (450) if the set of beamforming antenna pairs is generated by selecting antenna pairs from the receiver array (460); or for each of a plurality of receiver antennas (431, 432) within the receiver array (430) if the set of beamforming antenna pairs is generated by selecting antenna pairs from the transmitter array (420).

8. The computer-implemented method according to claim 7, further comprising:

- determining (402) range space vectors for the plurality of transmitter antennas (451, 452) or the plurality of receiver antennas (431, 432) based on the respective null spaces of the self-interference;

- determining (403) a null space of the range space vectors; and
- determining (404) beamforming coefficients for the respective antennas within the set of beamforming antenna pairs at the receiver array based on a linear combination of the null space vectors within the null space of the range space vectors.

9. The computer-implemented method according to any of the preceding claims, wherein the set of beamforming antenna pairs (214) comprises each of at least three transmitter antennas (221 - 223) within the transmitter array (220) at least once, or wherein the set of beamforming antennas pairs (215) comprises each of at least three receiver antennas (261, 262, 263) within the receiver array (260) at least once.

10. The computer-implemented method according to any of the preceding claims, further comprising determining respective sets of beamforming coefficients for the respective antennas within the set of beamforming antenna pairs at a plurality of frequencies.

11. A data processing system configured to perform the computer implemented method according to any one of claims 1 to 10.

12. A computer program comprising instructions which, when the program is executed by a computer, cause the computer to perform the computer implemented method according to any one of claims 1 to 10.

13. A computer-readable medium comprising instructions which, when executed by a computer, cause the computer to perform the computer implemented method according to any one of claims 1 to 10.

14. A method for reducing self-interference from at least three transmitter antennas (211, 222, 223) at at least one receiver antenna (231), the method comprising:

- for respective transmitter antenna pairs within a set of transmitter antenna pairs (214) comprising pairs of the at least three transmitter antennas:

- transmitting, by a first transmitter antenna (341, 343) of the pair, a first signal;
- transmitting, by a second transmitter antenna (342, 344) of the pair, a second signal having substantially the same waveform as the first signal;
- scaling an amplitude of the first signal with a scaling factor (311) such that the magnitude of the first signal matches a magnitude of the second signal at the at least one receiver antenna (231);
- sweeping the phase difference between the first and second signal;
- determining an anti-phase (312) of the first signal as a minimum (332) within the received power levels (331) at the at least one receiver antenna during the sweep of the phase difference;

- determining (202) a null space of the self-interference (217) based on the respective scaling factors and the anti-phases; and determining (203) beamforming coefficients (218) for the respective at least three transmitter antennas by performing the computer-implemented method according to any of claims 1 - 14.

15. A method for reducing self-interference from at least one transmitter antenna at at least three receiver antennas, the method comprising:

- for respective receiver antenna pairs within a set of receiver antenna pairs (214) comprising pairs of the at least three receiver antennas:

- transmitting a signal by the at least one transmitter antenna;
- receiving the signal by a first receiver antenna and by a second receiver antenna of the pair;
- scaling an amplitude of the signal as received at the first receiver antenna with a scaling factor (311) such that the scaled magnitude of the signal matches a magnitude of the signal received by the second receiver antenna;
- sweeping the phase difference between the signal received at the first and second receiver antenna;
- determining an anti-phase (312) of the signal received by the second receiver antenna as a minimum (332) within the power levels (331) obtained by combining the signal received at the first and second receiver antenna;

- determining (202) a null space of the self-interference (217) based on the respective scaling factors and the anti-phases; and determining (203) beamforming coefficients (218) for the respective at least three receiver antennas by performing the computer-implemented method according to any of claims 1-14.

Fig. 1

$\{R_1, R_2, \ldots, R_{M-1}, R_M\}$ ⌇ 260

$\{T_1, T_2, \ldots, T_{M-1}, T_M\}$ ⌇ 220

200

Generating a set of beamforming antenna pairs ⌇ 201

210

$\{BP_1, BP_2, \ldots, BP_{M-1}\}$

211  212  213

214
$\{(T_1, T_2), (T_2, T_3), \ldots, (T_{M-1}, T_M)\}$

215
$\{(R_1, R_2), (R_2, R_3), \ldots, (R_{M-1}, R_M)\}$

Determining a null space of the self-interference at the receiver array ⌇ 202

$$\begin{bmatrix} v_1 \\ v_2 \\ \vdots \\ v_{M-1} \end{bmatrix} = \begin{bmatrix} 1 & g_1 e^{j\theta_1} & 0 & \cdots & 0 & 0 \\ 0 & 1 & g_2 e^{j\theta_2} & \cdots & 0 & 0 \\ \vdots & \vdots & \vdots & \vdots & \vdots & \vdots \\ 0 & 0 & 0 & \cdots & 1 & g_{M-1} e^{j\theta_{M-1}} \end{bmatrix}$$

216                          217

Determining beamforming coefficients ⌇ 203

$$a = A_1 v_1 + A_2 v_2 + \cdots + A_{M-1} v_{M-1}$$

218            219

220

130

221  222  223                    231

101                              230

240

130

251        261  262  263

101        250            260

Fig. 2

**Fig. 3**

$300$

$\{T_1, T_2, \ldots, T_{M-1}, T_M\}$ ~ 220

210

201 — Generating a set of beamforming antenna pairs

$\{BP_1, BP_2, \ldots, BP_{M-1}\} = \{(T_1, T_2), (T_2, T_3), \ldots, (T_{M-1}, T_M)\}$ — 214

211 212 213

301 — Determining a scaling factor

$g_m$ ~ 311

302 — Determining an anti-phase

$e^{j\theta_m}$ ~ 312

303 — Determining a null space vector

$$\begin{bmatrix} v_1 \\ v_2 \\ \vdots \\ v_{M-1} \end{bmatrix} = \begin{bmatrix} 1 & g_1 e^{j\theta_1} & \cdots & 0 & 0 \\ 0 & 1 & \cdots & 0 & 0 \\ \vdots & \vdots & \ddots & \vdots & \vdots \\ 0 & 0 & \cdots & 1 & g_{M-1} e^{j\theta_{M-1}} \end{bmatrix}$$

216    217

$g_2 e^{j\theta_2}$

203 — Determining beamforming coefficients

$a = A_1 v_1 + A_2 v_2 + \cdots + A_{M-1} v_{M-1}$ ~ 219

218

$for\ BP_m = 1, \ldots M - 1$ — 304

320

$P\ (dB)$ vs $(T_1, T_2)\ (T_2, T_3)\ \cdots\ (T_{M-1}, T_M)$

321, 322, 323, 324, 325, 326

341, 342, 343, 344

330

$P\ (dB)$ vs $\theta\ (°)$: 0, 120, 240, 360

331, 332

400

| 201 Generating a set of beamforming antenna pairs |

| 401 Determining a null space of the self-interference at the receiver array for each of a plurality of receiver antennas or transmitter antennas |

| 402 Determining range space vectors |

| 403 Determining a null space of the range space vectors |

| 404 Determining beamforming coefficients |

420

130

421 422 423 431 432

101 420 430

440

130

451 452 461 462 463

101 450 460

Fig. 4

Fig. 5

**EUROPEAN SEARCH REPORT**

Application Number

EP 24 22 2123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 385 004 B (UNIV BEIJING) 9 July 2021 (2021-07-09) * paragraph [0004] - paragraph [0034] * ----- | 1-15 | INV. H04B7/0456 H04L5/14 |

TECHNICAL FIELDS SEARCHED (IPC)

H04B
H04L

The present search report has been drawn up for all claims

| Place of search | Date of completion of the search | Examiner |
|---|---|---|
| Munich | 21 May 2025 | Neeb, Christoph |

EPO FORM 1503 03.82 (P04C01)

## ANNEX TO THE EUROPEAN SEARCH REPORT
## ON EUROPEAN PATENT APPLICATION NO.

EP 24 22 2123

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | | Publication date | Patent family member(s) | Publication date |
|---|---|---|---|---|
| CN 111385004 | B | 09-07-2021 | NONE | |

For more details about this annex : see Official Journal of the European Patent Office, No. 12/82

EPO FORM P0459